# EUROPÄISCHE PATENTSCHRIFT

(11) **EP 1 351 360 B1**
(45) Veröffentlichungstag und Bekanntmachung des Hinweises auf die Patenterteilung: **14.03.2007**
(21) Anmeldenummer: 03001845.1
(22) Anmeldetag: 29.01.2003
(51) Int. Cl.: H02G 3/18, H02G 3/38

(54) **Unterflurinstallationsdose**
Under floor installation box
Boîte de jonction pour sol

(30) Priorität: 06.04.2002 DE 20205354 U
(43) Veröffentlichungstag der Anmeldung: 08.10.2003
(73) Patentinhaber: OBO Bettermann GmbH & Co. KG, 58710 Menden (DE)
(72) Erfinder: Schimek, Andreas, 58708 Menden (DE); Weissbach, Wilfried, 58708 Menden (DE)
(74) Vertreter: Köchling, Conrad-Joachim

(56) Entgegenhaltungen:
- DE-A- 1 908 480
- DE-A- 19 639 521

## Beschreibung

Die Erfindung betrifft eine Unterflurinstallationsdose, insbesondere für elektrotechnische Installationen, bestehend aus einer Bodenplatte und einem Installationsrahmen, der mittels Nivellierschrauben an der Bodenplatte halterbar ist, wobei zusätzlich Verkleidungsteile zur Abdeckung des zwischen Bodenplatte und Rahmen verbleibenden Abstandsspaltes vorgesehen sind und wobei die Nivellierschrauben an ihrem der Bodenplatte zugewandten Ende ein Fußteil aufweisen.

Derartige Unterflurinstallationsdosen werden für Unterflurinstallationssysteme eingesetzt (z.B. DE-A-1 908 480). Die Bodenplatte wird üblicherweise an dem Gebäudeboden, beispielsweise an der Betonplatte befestigt. Der Installationsrahmen, der zum Ausgleich an den zu verlegenden Estrich und den darauf zu verlegenden Boden mittels Nivellierschrauben höhenverstellbar ist, dient dazu, den Installationsraum der Unterflurinstallationsdose abzugrenzen, wobei zusätzlich Verkleidungsteile an den Seitenrändern vorgesehen sind, mittels derer der Spalt zwischen der Bodenplatte und dem Installationsrahmen abgedeckt wird. An die Unterflurinstallationsdose können Installationskanäle angeschlossen werden, wobei die Verkleidungsteile das Anordnen solcher Kanäle ermöglichen, aber den verbleibenden Spalt abdecken. Die Abdeckung ist erforderlich, um das Einfließen von Estrich oder dergleichen zu vermeiden.

Bei bekannten Unterflurinstallationsdosen sind Nivellierschrauben vorgesehen, die an ihrem der Bodenplatte zugewandten Ende ein Fußteil aufweisen, welches gegebenenfalls aus Kunststoff ausgebildet sein kann. Hierdurch soll eine Trittschallübertragung vom Fußboden auf die Rohdecke unterbunden werden.

Durch die feste Verbindung der Nivellierschraube mit der Bodenplatte entstehen wesentliche Nachteile. Sofern nach der Installation solcher Unterflurinstallationsdosen der Estrich aufgebracht wird und anschließend auf den Estrich ein Fliesenbelag oder dergleichen aufgebracht wird, so entstehen Risse im Übergangsbereich zwischen Estrich, Fliese und Unterflurinstallationsdose, insbesondere deswegen, weil der Estrich beim Abbinden schwindet und die Unterflurinstallationsdose diesem Schwindungsprozess nicht folgen kann.

Andererseits ist eine feste Verbindung zwischen Installationsrahmen und Bodenplatte vor dem Aufbringen des Estrichs erforderlich, weil ansonsten die Gefahr besteht, dass der Installationsrahmen sich relativ zur Bodenplatte verschiebt.

Ausgehend von diesem Stand der Technik liegt der Erfindung die Aufgabe zugrunde, eine Unterflurinstallationsdose gattungsgemäßer Art zu schaffen, bei der Rissbildungen aufgrund von schwindungsbedingten Bewegungen zwischen Estrich, darauf befindlichem Belag (beispielsweise Fliesen) und Unterflurinstallationsdose vermieden werden können.

Zur Lösung dieser Aufgabe schlägt die Erfindung vor, dass zwischen dem Fußteil und der Bodenplatte ein Hilfsteil angeordnet ist, welches lösbar mit der Bodenplatte und mit dem Fußteil verbunden ist und welches durch den vom Installationsrahmen und den Verkleidungsteilen umgrenzten Installationsraum her zugänglich und entfernbar ist.

Gemäß dieser Anordnung ist zwischen dem Fußteil der Nivellierschrauben und der Bodenplatte ein Hilfsteil angeordnet. Bei der Installation der Unterflurinstallationsdose ist das Hilfsteil zunächst fest mit der Bodenplatte und mit dem Fußteil der Nivellierschraube verbunden, so dass die gesamte Unterflurinstallationsdose eine ausreichend stabile Einheit bildet. Nach Anordnung des gesamten Installationssystems kann Estrich aufgetragen werden. Nach dem Abbinden des Estrichs kann das Hilfsteil entfernt werden, indem der Monteur in den Installationsraum der Unterflurinstallationsdose eingreift und das Hilfsteil entfernt. Hierdurch ist die unmittelbare Verbindung zwischen dem Fußteil der Nivellierschraube und der Bodenplatte aufgehoben, so dass der Installationsrahmen samt Nivellierschrauben schwindungsbedingten Bewegungen des Estrichs zwängungsfrei folgen kann. Hierdurch sind Setzrisse oder dergleichen vermieden.

Insbesondere ist erfindungsgemäß vorgesehen, dass das zwischen dem Fußteil der Nivellierschrauben und der Bodenplatte angeordnete Hilfsteil so dimensioniert ist, dass nacht Entfernung des Hilfsteils ein Abstandsspalt zwischen Bodenplatte und Fußteilen verbleibt.

Die Dimensionierung des Hilfsteils, insbesondere dessen Höhe, ist so bemessen, dass nach Entfernung des Hilfsteils ein ausreichender Abstandsspalt zwischen der Bodenplatte und den Fußteilen der Nivellierschrauben verbleibt. Aufgrund dieser Ausbildung kann der Installationsrahmen samt Nivellierschrauben schwindungsbedingten Bewegungen des Estrichs oder dergleichen folgen, ohne dass es zu Rissbildungen kommt.

Bevorzugt ist ferner vorgesehen, dass das Hilfsteil als Schieber ausgebildet ist, der einerseits in eine Schiebeführung der Bodenplatte einschiebbar ist und der andererseits auf das Fußteil aufschiebbar ist.

Um die Entfernung des Hilfsteiles zu erleichtern ist zudem vorgesehen, dass das Hilfsteil an seinem etwa zur Mitte der Bodenplatte gerichteten Ende eine Handhabe aufweist.

Um bei der Erstinstallation der Unterflurinstallationsdose einen sicheren Sitz der Teile aneinander zu gewährleisten ist zudem vorgesehen, dass das Hilfsteil in der Montagesolllage an der Bodenplatte lösbar verrastet ist.

Ein Ausführungsbeispiel der Erfindung ist in der Zeichnung dargestellt und im Folgenden näher beschrieben.

Es zeigt:
- Figur 1: eine Unterflurinstallationsdose in Ansicht;

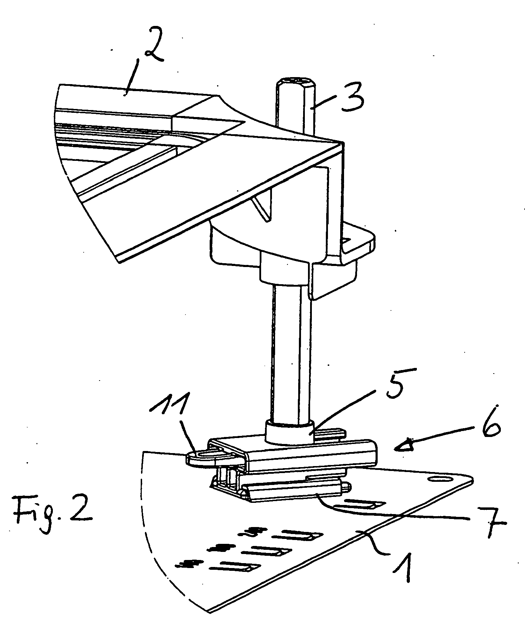

- Figur 2: eine Einzelheit der Figur 1 in vergrößerter Darstellung;

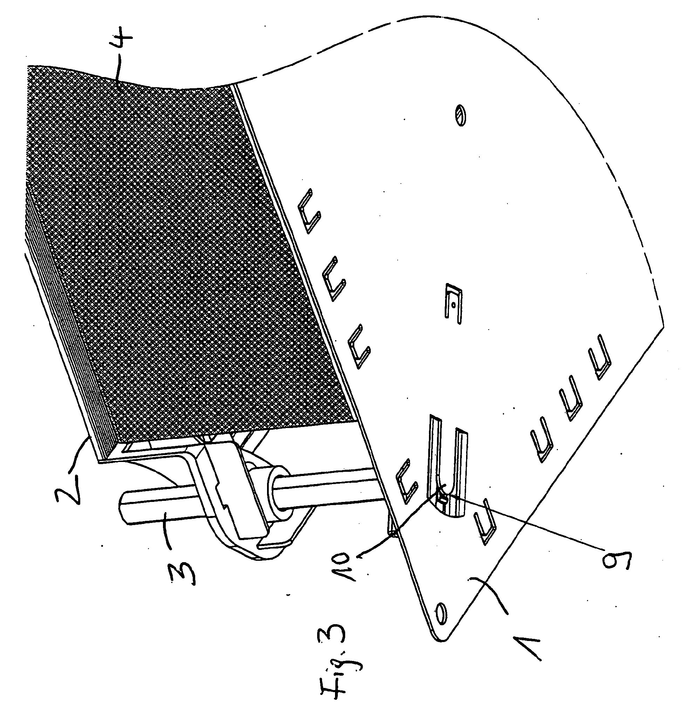

- Figur 3: eine Einzelheit der Installationsdose von unten gesehen;

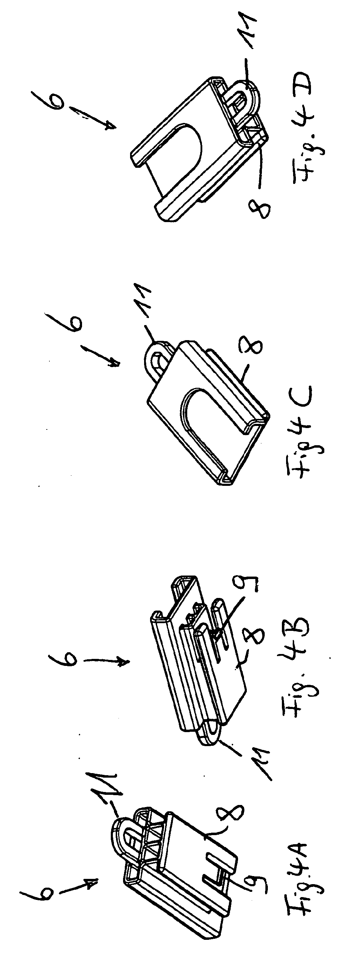

- Figur 4A bis D: Einzelheiten in unterschiedlicher Blickrichtung.

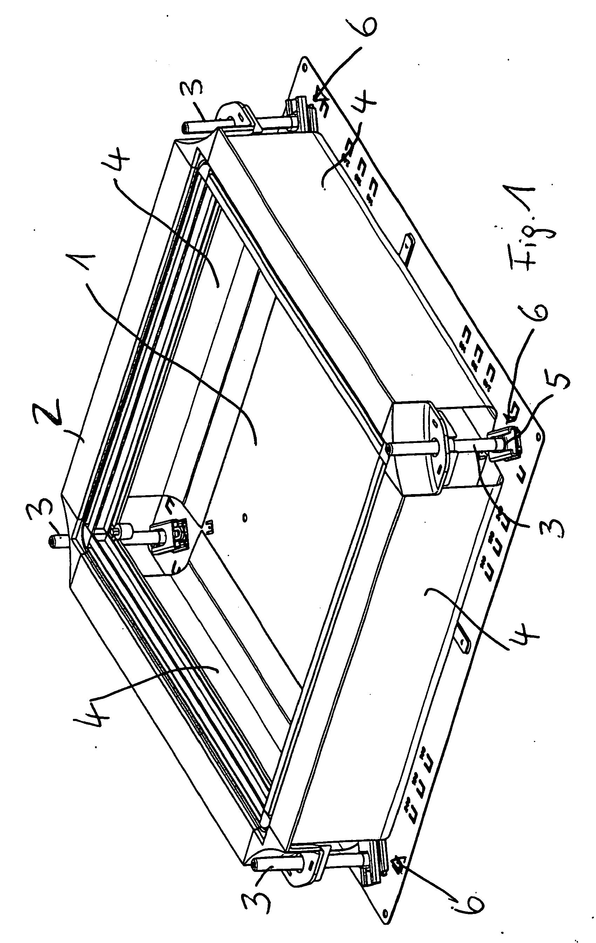

In Figur 1 ist eine Unterflurinstallationsdose gezeigt, die vornehmlich für elektrotechnische Installationen dient. Selbstverständlich ist eine solche Installationsdose auch für sanitäre oder heizungstechnische Zwecke brauchbar.

Sie besteht aus einer Bodenplatte 1 und einem Installationsrahmen 2, der mittels Nivellierschrauben 3 an der Bodenplatte 1 gehaltert ist. Zusätzlich sind Verkleidungsteile 4 zur Abdeckung des zwischen Bodenplatte 1 und Rahmen 2 verbleibenden Abstandsspaltes vorgesehen. Die Verkleidungsteile 4 können formstabile Blechteile oder auch Folien oder Drahtgewebe sein. An die Unterflurinstallationsdose können Installationskanäle angeschlossen werden, wobei die Verkleidungsteile 4 entsprechende Anschlussräume für die Kanäle bildend angepasst werden können.

Die Nivellierschrauben 3 weisen an ihrem der Bodenplatte 1 zugewandten Ende tellerartige Fußteile 5 auf. Bei der Installation wird die Bodenplatte an dem Rohboden befestigt und der Installationsrahmen 2 wird durch Betätigung der Nivellierschrauben 3 entsprechend ausnivelliert. Anschließend kann nach Fertigstellung des gesamten Unterflurinstallationssystems der Rohboden mit Estrich beschichtet werden, so dass der Installationsrahmen im Wesentlichen in der vom Estrich aufgespannten Ebene liegt.

Zwischen dem Fußteil 5 und der Bodenplatte 1 ist ein Hilfsteil 6 angeordnet, welches einerseits lösbar mit der Bodenplatte 1 und andererseits lösbar mit dem Fußteil 5 verbunden ist. Durch das Hilfsteil 6 wird zunächst bei der Installation der Unterflurinstallationsdose eine feste Zuordnung der Einzelteile erreicht. Nach Aufbringen des Estrichs und nach Abbinden des Estrichs sind die Teile lagerichtig zueinander durch den Estrich gehalten. Es kann dann das Hilfsteil 6 durch Eingriff in den vom Installationsrahmen 2 und den Verkleidungsteilen 4 umgrenzten Installationsraum entfernt werden. Hierdurch ist die feste Verbindung zwischen der Nivellierschraube 3 und der Bodenplatte 1 aufgehoben. Vorzugsweise ist das Hilfsteil 6 so bemessen, dass nach der Entfernung des Hilfsteiles 6 ein ausreichend großer Abstandsspalt zwischen der Bodenplatte 1 und den Fußteilen 5 der Nivellierschrauben 3 verbleibt. Auf diese Weise ist sichergestellt, dass der Installationsrahmen 2 samt Nivellierschrauben 3 schwindungsbedingten Bewegungen des Estrichs folgen kann, ohne dass hierbei Risse auftreten. Zudem wird eine Trittschallübertragung vom Fußboden auf die Rohdecke durch diese Entkopplung verhindert.

Wie aus den Zeichnungsfiguren ersichtlich, ist das Hilfsteil 6 als Schieber ausgebildet, der einerseits in eine Schiebeführung 7 der Grundplatte 1 einschiebbar ist und der andererseits auf das Fußteil 5 der Nivellierschraube 3 aufschiebbar ist.

Im Ausführungsbeispiel sind aus der Grundplatte 1, die ein Blechteil ist, Elemente ausgeschnitten und ausgebogen, die eine C-profilartige Schiebeführung 7 bilden. Das Hilfsteil 6 weist dazu passend ein Fußteil auf, welches in diese Schiebeführung 7 einschiebbar ist. An diesem Fußteil 8 ist eine Raste 9 angeformt, die in der Montagesolllage mit einer Rastkante 10 der Grundplatte 1 zusammenwirkt, so dass eine Lagesicherung erreicht ist, die aber überwindbar ist, sofern das Hilfsteil 6 entfernt werden soll. Die Aufnahme für den Fuß 5 der Nivellierschraube 3 ist ebenfalls nach Art eines C-Profils an der Oberseite des Hilfsteiles 6 ausgebildet, wobei diese C-Profilierung einseitig geschlossen ist, so dass ein Einsteckbegrenzungsanschlag für den Fuß 5 der Nivellierschraube 3 gebildet ist. Zusätzlich weist das Hilfsteil 6 an seinem in Montagesolllage etwa zur Mitte der Bodenplatte 1 gerichteten Ende eine Handhabe 11 auf. Der Montierende kann an dieser Handhabe 11 manuell oder mit einem Werkzeug angreifen, um das Hilfsteil 6 in Richtung auf die Mitte der Bodenplatte 1 zu verschieben und zu entfernen.

## Patentansprüche

1. Unterflurinstallationsdose, insbesondere für elektrotechnische Installationen, bestehend aus einer Bodenplatte (1) und einem Installationsrahmen (2), der mittels Nivellierschrauben (3) an der Bodenplatte (1) halterbar ist, wobei zusätzlich Verkleidungsteile (4) zur Abdeckung des zwischen Bodenplatte (1) und Rahmen (2) verbleibenden Abstandsspaltes vorgesehen sind und wobei die Nivellierschrauben (3) an ihrem der Bodenplatte (1) zugewandten Ende ein Fußteil (5) aufweisen, **dadurch gekennzeichnet, dass** zwischen dem Fußteil (5) und der Bodenplatte (1) ein Hilfsteil (6) angeordnet ist, welches lösbar mit der Bodenplatte (1) und mit dem Fußteil (5) verbunden ist und welches durch den vom Installationsrahmen (2) und den Verkleidungsteilen (4) umgrenzten Installationsraum her zugänglich und entfernbar ist.

2. Unterflurinstallationsdose, nach Anspruch 1, wobei die Unterflurinstallationsdose in trittfestes Material, insbesondere Estrich eingebettet ist, **dadurch gekennzeichnet, dass** das zwischen dem Fußteil (5) der Nivellierschrauben (3) und der Bodenplatte (1) angeordnete Hilfsteil (6) so dimensioniert ist, dass nach Entfernung des Hilfsteils (6) ein Abstandsspalt zwischen Bodenplatte (1) und Fußteilen (5) verbleibt.

3. Unterflurinstallationsdose nach Anspruch 1 oder 2, **dadurch gekennzeichnet, dass** das Hilfsteil (6) als Schieber ausgebildet ist, der einerseits in eine SchieBodenplatte (1) einschiebbar ist und der andererseits auf das Fußteil (5) aufschiebbar ist.

4. Unterflurinstallationsdose nach einem der Ansprüche 1 bis 3, **dadurch gekennzeichnet, dass** das Hilfsteil (6) an seinem etwa zur Mitte der Bodenplatte (1) gerichteten Ende eine Handhabe (11) aufweist.

5. Unterflurinstallationsdose nach einem der Ansprüche 1 bis 4, **dadurch gekennzeichnet, dass** das Hilfsteil (6) in der Montagesolllage an der Bodenplatte (1) lösbar verrastet ist.

## Claims

1. Under-floor installation box, in particular for electrical engineering installations, comprising a base plate (1) and an installation frame (2) which can be held on the base plate (1) by means of levelling screws (3), wherein in addition, trim parts (4) are provided in order to cover the spacing gap remaining between the base plate (1) and the frame (2) and wherein the levelling screws (3) have a foot part (5) on their end facing the base plate (1),
**characterised in that**
arranged between the foot part (5) and the base plate (1) is an auxiliary part (6), which is detachably connected to the base plate (1) and to the foot part (5) and which can be accessed and removed via the installation space bounded by the installation frame (2) and the trim parts (4).

2. Under-floor installation box according to claim 1, wherein the under-floor installation box is embedded in tread-proof material, in particular in screed, **characterised in that** the auxiliary part (6) that is arranged between the foot part (5) of the levelling screws (3) and the base plate (1) is dimensioned such that after removal of the auxiliary part (6), a spacing gap remains between the base plate (1) and the foot parts (5).

3. Under-floor installation box according to claim 1 or 2, **characterised in that** the auxiliary part (6) is designed as a slide, which on the one hand can be pushed into the base plate (1), and on the other hand can be pushed onto the foot part (5).

4. Under-floor installation box according to one of the claims 1 to 3, **characterised in that** the auxiliary part (6) has a handle (11) on its end that is roughly directed towards the middle of the base plate (1).

5. Under-floor installation box according to one of the claims 1 to 4, **characterised in that** the auxiliary part (6) is detachably engaged on the base plate (1), in the target installation position.

## Revendications

1. Boîte de jonction encastrable dans le sol, notamment pour des installations électrotechniques, composée d'une plaque de base (1) et d'un cadre d'installation (2) pouvant être fixé à la plaque de base (1) au moyen de vis de niveau (3), des éléments d'habillage (4) destinés à obturer la fente restant entre la plaque de base (1) et le cadre (2) étant en outre prévus, et les vis de niveau (3) présentant à leur extrémité pointant vers la plaque de base (1) une partie de pied (5), **caractérisée en ce qu'**une pièce auxiliaire (6) est disposée entre la pièce de pied (5) et la plaque de base (1), qui est reliée de façon amovible à la plaque de base (1) et à la pièce de pied (5) et qui est accessible et retirable par l'espace délimité par le cadre d'installation (2) et les éléments d'habillage (4).

2. Boîte de jonction encastrable dans le sol selon la revendication 1, ladite boîte de jonction encastrable dans le sol étant noyée dans un matériau solide sur lequel on peut marcher, notamment de la chape, **caractérisée en ce que** la pièce auxiliaire (6) disposée entre la partie de pied (5) des vis de niveau (3) et la plaque de base (1) est dimensionnée de telle sorte qu'après avoir retiré la pièce auxiliaire (6), il reste une fente entre la plaque de base (1) et les pièces de pied (5).

3. Boîte de jonction encastrable dans le sol selon la revendication 1 ou 2, **caractérisée en ce que** la pièce auxiliaire (6) est réalisée sous la forme d'un élément coulissant pouvant, d'une part, être insérée dans une plaque de base (1) et, d'autre part, être enfilée sur la pièce de pied (5).

4. Boîte de jonction encastrable dans le sol selon l'une des revendications 1 à 3, **caractérisée en ce que** la pièce auxiliaire (6) présente une poignée (11) à son extrémité pointant approximativement vers le milieu de la plaque de base (1).

5. Boîte de jonction encastrable dans le sol selon l'une des revendications 1 à 4, **caractérisée en ce qu'**en position théorique de montage, la pièce auxiliaire (6) est enclenchée de façon amovible sur la plaque de base (1).
